# EUROPÄISCHE PATENTSCHRIFT

(11) **EP 2 595 834 B1**
(45) Veröffentlichungstag und Bekanntmachung des Hinweises auf die Patenterteilung: **21.10.2020**
(21) Anmeldenummer: 11722318.0
(22) Anmeldetag: 17.05.2011
(51) Int. Cl.: B60L 53/36, B60L 53/38, H02J 7/02, H02J 7/00, B60L 53/122, B60L 53/126, B60L 53/66

(54) **ELEKTROBELADUNGSSYSTEM**
ELECTRIC CHARGE SYSTEM
SYSTÈME DE CHARGE ÉLECTRIQUE

(30) Priorität: 19.07.2010 DE 102010027640
(43) Veröffentlichungstag der Anmeldung: 29.05.2013
(73) Patentinhaber: SEW-EURODRIVE GmbH & Co. KG, 76646 Bruchsal (DE)
(72) Erfinder: SCHMIDT, Josef, 76676 Graben-Neudorf (DE); HUA, Zhidong, 76131 Karlsruhe (DE); SCHÄFER, Thomas, 76689 Neuthard (DE)
(86) Internationale Anmeldenummer: PCT/EP2011/002433
(87) Internationale Veröffentlichungsnummer: WO 2012/010230

(56) Entgegenhaltungen:
- EP-A1- 2 058 916
- WO-A1-84/04212
- WO-A1-84/04212
- WO-A1-2008/050260
- WO-A1-2010/041318
- WO-A1-2010/041318
- WO-A2-2009/050625
- WO-A2-2009/050625
- DE-A1-102007 032 643
- US-A1- 2005 127 869
- US-A1- 2005 127 869
- US-A1- 2010 017 249
- US-A1- 2010 017 249
- US-A1- 2010 044 123
- US-A1- 2010 090 524

## Beschreibung

Die Erfindung betrifft ein Elektrobeladungssystem.

Aus der DE 102007032643 A1 ist eine Vorrichtung zur berührungslosen Leistungsübertragung, ein Verfahren zur Übermittlung eines Datensignals und eine Anlage zur berührungslosen Leistungsübertragung an bewegliche Verbraucher bekannt.

Aus der EP 2 346 142 A1 und aus der WO 2010/041318 A1 ist eine berührungslose Energieübertragung an ein Elektrofahrzeug bekannt.

Aus der US 2005/127869 A1 ist ein induktiver Leistungsadapter bekannt.

Aus der US 2010/017249 A1 ist ein Verfahren zur Beladung eines Elektrofahrzeugs bekannt.

Aus der WO 84/04212 A1 ist ein Fahrzeugbatterieladesystem bekannt.

Aus der WO 2009/050625 A2 ist ein Leistungsübertragungssystem bekannt.

Aus der US 2010/090524 A1 ist ein elektrisches Leistungsversorgungssystem für ein Fahrzeug bekannt.

Aus der WO 2008/050260 A1 ist ein induktives Versorgungssystem bekannt.

Der Erfindung liegt daher die Aufgabe zugrunde, ein Elektrobeladungssystem weiterzubilden, wobei das Elektrobeladungssystem sicher ist.

Erfindungsgemäß wird die Aufgabe bei dem Elektrobeladungssystem mittels der, bei dem Verfahren nach Anspruch 1, angegebenen Merkmale gelöst.

Wichtige Merkmale bei dem Elektrobeladungssystem zum berührungslosen Beladen einer Batterie einer mobilen Einheit sind, dass das Elektrobeladungssystem eine ortsfeste Ladestation aufweist, wobei eine Primärspulenvorrichtung der Ladestation ortsfest angeordnet ist und eine Sekundärspulenvorrichtung des Elektrobeladungssystems in der mobilen Einheit angeordnet ist, wobei die Primärspulenvorrichtung und die Sekundärspulenvorrichtung derart ausgeführt sind, dass zwischen Ihnen in einer zur Primärspulenvorrichtung relativen Ladeposition der mobilen Einheit eine Ladeenergie zum Beladen oder Entladen der Batterie übertragbar ist und Daten zur Kommunikation zwischen der mobilen Einheit und der Ladestation berührungslos empfangbar und/oder sendbar sind. Von Vorteil ist dabei, dass die Ladestation sicher ist, da auch sicherheitsrelevante Daten zwischen der Ladestation und der mobilen Einheit übertragbar sind und auch das Aufladen der Batterie durch die Ladestation überwachbar ist.

Bei einer vorteilhaften Ausgestaltung ist die Primärspulenvorrichtung als eine Gesamtprimärspule (6) ausgeführt und die Sekundärspulenvorrichtung ist als Gesamtsekundärspule (19) ausgeführt. Von Vorteil ist dabei, dass wenig Teile benötigt werden und die nötigen Bauteile wenig Bauraum einnehmen. Somit lassen sich die nötigen Bauteile kompakt verbauen.

Bei einer weiteren vorteilhaften Ausgestaltung ist die Primärspulenvorrichtung als Primärspule und eine erste Spuleneinrichtung ausgeführt und die Sekundärspulenvorrichtung ist als eine Sekundärspule und eine zweite Spuleneinrichtung ausgeführt, wobei während eines Beladevorgangs oder eines Entladevorgangs der Batterie zwischen der Primärspule und der Sekundärspule die Ladeenergie berührungslos übertragbar ist und zwischen der ersten und zweiten Spuleneinrichtung ein Datensignal, vorzugsweise bidirektional, übertragbar ist, wobei die Primärspule, die erste Spuleneinrichtung, die Sekundärspule und die zweite Spuleneinrichtung so angeordnet sind, dass ein jeweils erzeugtes Magnetfeld die Primärspule, die erste Spuleneinrichtung, die Sekundärspule und die zweite Spuleneinrichtung durchdringen. Von Vorteil ist dabei, dass die Ladeenergie und das Datensignal über getrennte Wege sicher übertragbar sind.

Bei einer weiteren vorteilhaften Ausgestaltung weist die Primärspulenvorrichtung zwei oder mehr erste Spuleneinrichtungen auf, wobei in der mobilen Einheit eine, insbesondere eine einzige, zweite Spuleneinrichtung angeordnet ist, wobei die zwei oder mehr erste Spuleneinrichtung derart im Parkbereich der mobilen Einheit angeordnet sind, und mit der zweiten Spuleneinrichtung derart zusammenwirken, dass die mobile Einheit auf Grund der Signale der ersten Spuleneinrichtung und der zweiten Spuleneinrichtung automatisch im Parkbereich positionierbar ist. Von Vorteil ist dabei, dass die mobile Einheit sicher richtig über relativ zur Ladestation positionierbar ist. Dadurch ist auch ein sicheres aufladen gewährleistet.

Bei einer weiteren vorteilhaften Ausgestaltung weist die Ladestation eine Energieladematte auf, in welcher die Primärspule oder die erste und zweiten Primärspulen angeordnet sind, wobei die Energieladematte in einen Parkbereich des Fahrzeugs eingelassen ist. Von Vorteil ist dabei, dass der Aufwand zum Beladen der Batterie minimiert ist und auch keine Fehler beim Anschließen der mobilen Einheit beziehungsweise der Batterie an die Ladestation möglich sind oder zumindest von der Ladestation und/oder der mobilen Einheit erfassbar sind. Somit ist das Elektrobeladungssystem sicher.

Bei einer weiteren vorteilhaften Ausgestaltung umfasst die Energieladematte die Primärspule und die ersten Spuleneinrichtungen, einen Energie-Einspeisesteller und ein erstes Modem, wobei der Energie-Einspeisesteller signaltechnisch mit der Primärspule verbunden ist und das erste Modem signaltechnisch mit der ersten Spuleneinrichtung verbunden ist. Von Vorteil ist dabei, dass ein Datensignal sicher übertragbar ist.

Bei einer weiteren vorteilhaften Ausgestaltung sind die Primärspule, die erste Spuleneinrichtung sowie die Sekundärspule und die zweite Spuleneinrichtung als Flachspule ausgeführt, wobei jeweils die erste Spuleneinrichtung innerhalb der Primärspule und die zweite Spuleneinrichtung innerhalb der Sekundärspule angeordnet sind. Von Vorteil ist dabei, dass die jeweilige Anordnung der Primärspule und der ersten Spuleneinrichtung sowie der Sekundärspule und der zweiten Spuleneinrichtung kompakt sind und sicher einbaubar sind.

Wichtige Merkmale bei dem Verfahren zum Beladen einer Batterie in einer mobilen Einheit mit dem Elektrobeladungssystem sind, dass
- die mobile Einheit durch Überfahren der Energieladematte das Elektrobeladungssystem aktiviert,
- Daten über die Batterie an die Ladestation übermittelt werden,
- die Batterie aufgeladen wird und gleichzeitig ein Wert für den Ladezustand der Batterie, vorzugsweise im Datensignal, an die Ladestation übermittelt wird.

Von Vorteil ist dabei, dass das Laden der Batterie auf Grund der Daten sicher durchführbar ist.

Bei einer vorteilhaften Ausgestaltung des Verfahrens positioniert sich die mobile Einheit mittels ihres Antriebs und ihrer Steuerung mit Hilfe der zweiten Spuleneinrichtung im Zusammenspiel mit den ersten Spuleneinrichtungen über der Energieladematte, so dass die Ladeenergie zwischen Primärspule und Sekundärspule übertragen wird. Von Vorteil ist dabei, dass die mobile Einheit möglichst optimal positionierbar ist und dadurch das Laden der Batterie besonders sicher ist.

Erfindungsgemäß werden gleichzeitig mit dem Beladen Daten über den Wartungstechnischen Zustand der mobilen Einheit übermittel und ausgewertet, um entsprechende Wartungsarbeiten zu veranlassen oder vorzubereiten. Von Vorteil ist dabei, dass nicht nur die Sicherheit des Elektrobeladungssystems durch die Datenübermittlung gegeben ist, sondern zusätzlich auch die Sicherheit der mobilen Einheit verbessert ist.

Erfindungsgemäß wird die Datenübertragung mit einem Signal mit einer Datenträgerfrequenz im Bereich ab 0,1 MHz, vorzugsweise zwischen 0,9 MHz und 1,5 MHz betrieben und die Übertragung der Ladeenergie wird mit einer Energieträgerfrequenz im Bereich von 1 bis 500 kHz, vorzugsweise im Bereich zwischen 20 und 60 kHz betrieben. Von Vorteil ist dabei, dass die Datenübertragung von der Übertragung der Ladeenergie weniger beeinflussbar ausführbar ist und somit sicherer ist.

Erfindungsgemäß ist die Datenträgerfrequenz immer größer als die Energieträgerfrequenz ist. Von Vorteil ist dabei, dass die Datenübertragung von der Übertragung der Ladeenergie weniger beeinflusst wird und somit sicherer ist.

Erfindungsgemäß wird /werden
- der Ladezustand der Batterie und zumindest ein Istwert für Ladestrom und/oder Ladespannung erfasst,
- und ein Wert für den Ladezustand und der Istwert zumindest teilweise berührungslos zur Ladestation übermittelt,
- der erste Teil des Ladevorgangs mit einem Stromregler stromgeführt geregelt und wird ab einem Überschreiten eines Umschaltwerts des Ladezustands der Batterie der Ladevorgang mit einem Spannungsregler spannungsgeführt geregelt.

Von Vorteil ist dabei, dass die Batterie sicher und schnell aufladbar ist.

Erfindungsgemäß sind der Stromregler und/oder der Spannungsregler stationär angeordnet, also unbeweglich relativ zur Ladestation. Von Vorteil ist dabei, dass der Spannungsregler weniger Erschütterungen ausgesetzt ist, somit länger hält und dadurch das Elektrobeladungssystem sicherer ist.

Weitere Vorteile ergeben sich aus den Unteransprüchen. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Ausführungsbeispielen mit Bezugnahme zur Zeichnung näher erläutert. Es zeigen rein schematisch:
Fig. 1: ein erstes Ausführungsbeispiel eines erfindungsgemäßen Elektrobeladungssystems;
Fig. 2: ein zweites Ausführungsbeispiel eines erfindungsgemäßen Elektrobeladungssystems;
Fig. 3: ein drittes Ausführungsbeispiel eines erfindungsgemäßen Elektrobeladungssystems; und
Fig. 4: eine Schaltungsskizze des zweiten Ausführungsbeispiels eines erfindungsgemäßen Elektrobeladungssystems.

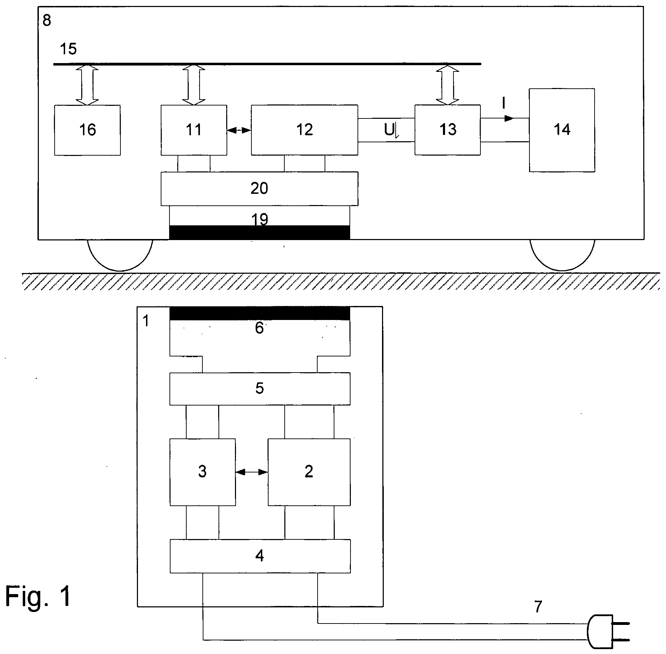

In der Figur 1 ist ein erfindungsgemäßes Elektrobeladungssystem gezeigt. Das Elektrobeladungssystem weist eine stationäre Energie-Ladematte 1 auf. Die Energieladematte 1 umfasst einen Energie-Einspeisesteller 2, ein Modem 3 beziehungsweise Transceiver, ein erstes analoges Filter 4, einer Gesamtprimärspule 6, sowie ein zweites analoges Filter 5 zwischen dem Energie-Einspeisesteller 2, dem Modem 3 und der ersten Primärspule 6.

Die Energieladematte 1 ist vorzugsweise in einem Parkbereich für ein Elektromobil eingelassen.

An eine Zuleitung 7 sind der Energie-Einspeisesteller 2 und das erste Modem 3 über ein erstes analoges Filter 4 angeschlossen. Das erste analoge Filter 4 trennt ein Datensignal für das Modem 3 von einer Ladeenergie für den Energie-Einspeisesteller 2. Die Zuleitung 7 wird in diesem Ausführungsbeispiel als PowerLan-Leitung genutzt. In weiteren Ausführungsbeispielen sind natürlich auch andere Zuleitungsoptionen denkbar, wie zum Beispiel kabelgebunden für die Energieversorgungsleitung und über Funk für das Datensignal.

Die Zuleitung 7 ist entsprechend an das elektrische Versorgungsnetz und gegebenenfalls an Datenleitung und/oder Datenempfangseinrichtungen angeschlossen.

Das erste Modem 3 und der Energie-Einspeisesteller 2 sind signaltechnisch verbunden. Steuerungskommandos für den Energie-Einspeisesteller 2 werden vom Modem 3 empfangen und an den Energie-Einspeisesteller 2 weitergeleitet. Zum Beispiel wird ein Sollwert für die Spannung und/oder den Strom, welche vom Energie-Einspeisesteller 2 zur Verfügung gestellt werden sollen vom ersten Modem 3 an den Energie-Einspeisesteller 2 übermittelt.

Der Energie-Einspeisesteller 2 ist vorzugsweise als Wechselstromquelle ausgeführt. Der von dem Energie-Einspeisesteller 2 erzeugte Wechselstrom weist vorzugsweise eine Frequenz im Bereich von 10 bis 1000 kHz auf, insbesondere eine Frequenz zwischen 10 und 100 kHz, besonders bevorzugt im Bereich zwischen 20 kHz und 60 kHz. Diese Frequenz wird hier auch als Energieträgerfrequenz bezeichnet.

Bei dem in Figur 1 gezeigten Ausführungsbeispiel sind das erste Modem 3 und die Energie-Einspeisesteller 2 signaltechnisch über ein zweites analoges Filter 5 mit einer Gesamtprimärspule 6 verbunden. Die Gesamtprimärspule 6 überträgt das Datensignal und die Ladeenergie an eine Gesamtsekundärspule 19, welche in einer mobilen Einheit 8 insbesondere einem Elektromobil angeordnet ist.

Das zweite analoge Filter 5 dient hauptsächlich zur Trennung des Datensignals von der Energieversorgungsleitung bei einer Kommunikation von der mobilen Einheit 8 mit der Energieladematte 1 oder einem an die Energieladematte 1 angeschlossenen intelligenten Stromversorgungsnetz. Das Datensignal weist vorzugsweise eine Datenträgerfrequenz im Bereich von größer 0,1 MHz insbesondere im Bereich zwischen 0,5 MHz und 100 MHz besonders bevorzugt im Bereich von 0,9 MHz bis 1,5 MHz.

Mit einem Elektromobil ist hier insbesondere ein Elektrofahrzeug, wie ein Auto, Fahrrad oder Motorrad gemeint. Die Erfindung eignet sich natürlich auch für den Einsatz bei fahrerlosen Transportsystemen für die Intralogistik.

An der Gesamtsekundärspule 19 ist ein drittes analoges Filter 20 signaltechnisch angeschlossen. Das dritte analoge Filter 20 trennt in der mobilen Einheit 8 das Datensignal wieder von der Ladeenergie des Energieeinspeisestellers 2. Mit dem dritten analogen Filter 20 ist jeweils ein Energie-Anpasssteller 12 und ein zweites Modem 11 für die Weiterverarbeitung des Datensignals und der Ladeenergie signaltechnisch verbunden.

Der Energie-Anpasssteller 12 ist mit einem Schaltkreis 13 verbunden. Der Schaltkreis 13 liefert einen definierten Ladestrom I an die Batterie 14 der mobilen Einheit 8.

Das zweite Modem 11 ist mit einem Bus 15 der mobilen Einheit 8 zur Datenübertragung verbunden. Der Bus 15 ist vorzugsweise als CAN-Bus oder Flexray ausgeführt. Andere bekannte Bus-Systeme sind auch einsetzbar. Zusätzlich ist das zweite Modem 11 mit dem Energie-Anpasssteller 12 signaltechnisch verbunden, um zum Beispiel einen Sollwert für eine zu liefernde Spannung U an den Energie-Anpasssteller 12 zu übergeben.

Durch die Verbindung mit dem Bus 15 ist auch eine sonstige elektronische Einrichtungen 16 über das zweite Modem 11 ansteuerbar. So lassen sich zum Beispiel Steuergeräte, Sensoreinheiten, Anzeigemodule oder Multimediaeinrichtungen der mobilen Einheit nutzen, um zum Beispiel die Gesamtprimärspule 6 und die Gesamtsekundärspule 19 relative zueinander zu positionieren.

Der Bus 15 ist auch mit dem Schaltkreis 13 verbunden. Dadurch lassen sich relevante Parameter des Schaltkreise 13 oder der Batterie 14 in vorhanden, mit dem Bus 15 verbundenen Anzeigeelementen der mobilen Einheit 8 anzeigen. Zum Beispiel kann so der Ladezustand der Batterie 14 im Armaturenbrett eines Elektromobils für einen Fahrer des Elektromobils überwacht werden.

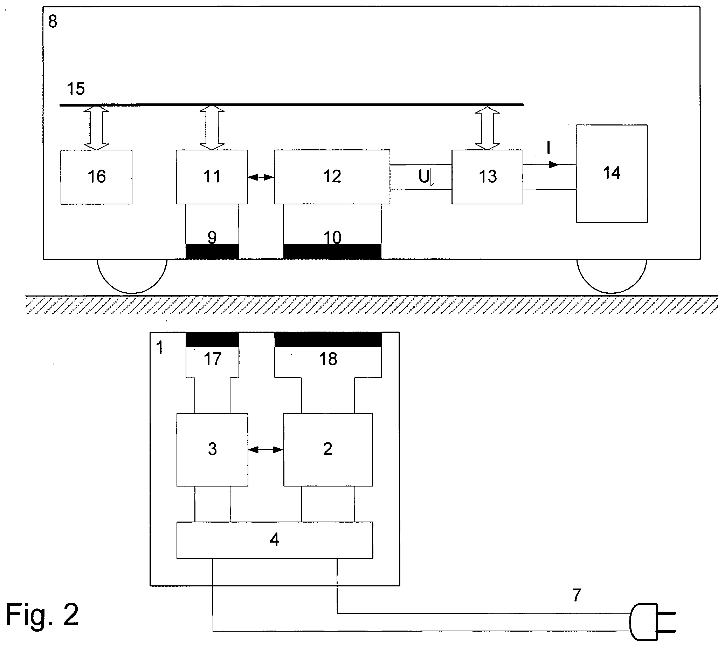

In Figur 2 ist eine weitere Ausführungsform des erfindungsgemäßen Elektrobeladungssystems gezeigt. Hierbei sind die Gesamtprimärspule 6 und die Gesamtsekundärspule 19 in jeweils eine Spuleneinrichtung und eine Spule aufgetrennt.

Anstelle der Gesamtprimärspule 6 ist eine erste Spuleneinrichtung 17 und eine Primärspule 18 vorgesehen. Anstelle der Gesamtsekundärspule ist eine zweite Spuleneinrichtung 9 und eine Sekundärspule vorgesehen.

Die erste und zweite Spuleneinrichtung 17, 9 sind jeweils mit dem ersten oder zweiten Modem 3, 11 verbunden. Die erste und zweite Spuleneinrichtung dienen zum berührungslosen Übertragen des Datensignals. Die Primärspule und die Sekundärspule werden zur berührungslosen Übertragung der Ladeenergie.

Dies hat den Vorteil, dass die erste und zweite Spuleneinrichtung 17, 9 und die Primärspule 18 und die Sekundärspule 10 jeweils für den entsprechenden Verwendungszweck optimierbar sind. Das zweite und dritte Analogfilter 5, 20 sind weglassbar.

Auch wenn in Figur 2 die Primärspule 18 und die erste Spuleneinrichtung 17 sowie die Sekundärspule 10 und die zweite Spuleneinrichtung 9 nebeneinander gezeichnet sind, so sind die Primärspule 17 und die erste Spuleneinrichtung 18 vorteilhafterweise so angeordnet, dass deren Wicklungsebenen in einer Ebene liegen, und die erste Spuleneinrichtung 17 vollständig innerhalb der Primärspule 18 liegt. Die Sekundärspule und die zweite Spuleneinrichtung sind entsprechend angeordnet. Die entsprechenden Wicklungen sind im Wesentlichen flach ausgeführt, was bedeutet, dass die Ausdehnung senkrecht zur Wicklungsebene klein ist im Verhältnis zur Ausdehnung in der Wicklungsebene. Dadurch wird möglichst wenig Bauraum für die Primärspule 18 und die erste Spuleneinrichtung 17 sowie die Sekundärspule 10 und die zweite Spuleneinrichtung 9 benötigt.

Durch diese Anordnung der Primärspule 18, der ersten Spuleneinrichtung 17 sowie der Sekundärspule 10 und der zweiten Spuleneinrichtung 9 durchdringt ein jeweils erzeugtes Magnetfeld der Primärspule 18, der ersten Spuleneinrichtung 17 sowie der Sekundärspule 10 und der zweiten Spuleneinrichtung 9 der jeweils alle anderen Primärspule 18, der ersten Spuleneinrichtung 17 sowie der Sekundärspule 10 und der zweiten Spuleneinrichtung 9.

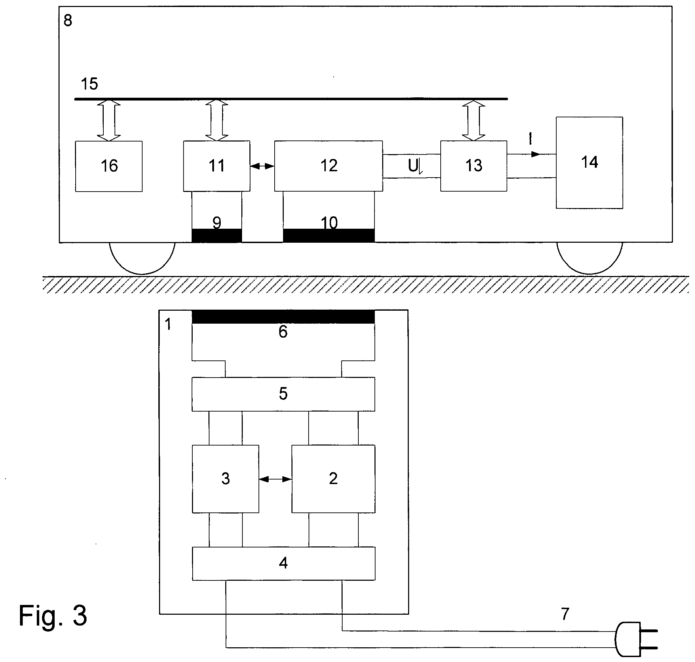

Figur 3 zweigt ein weiteres Ausführungsbeispiel eines erfindungsgemäßen Elektrobeladungssystems bei welchem im Unterschied zu dem in Figur 1 gezeigten Ausführungsbeispiels nur die Gesamtsekundärspule 19 in die zweite Spuleneinrichtung 9 und die Sekundärspule 10 aufgeteilt sind.

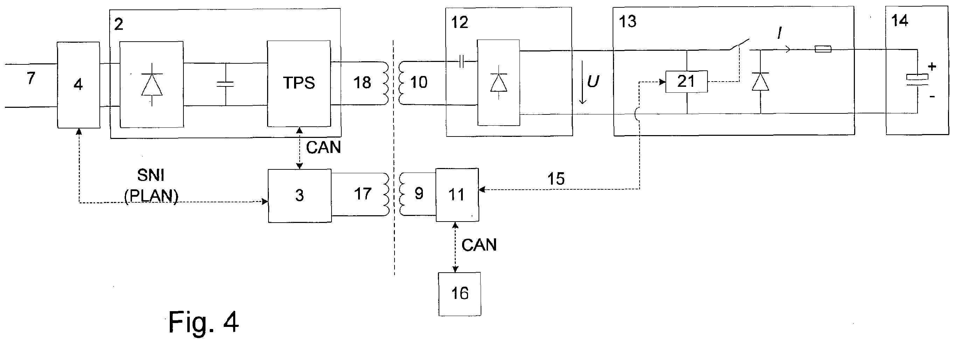

Figur 4 zeigt eine Schaltungsskizze des in Figur 2 gezeigten Ausführungsbeispiels. Die Netzleitung 7 ist über das erste analoge Filter 4 mit dem Energie-Einspeisesteller 2 und dem ersten Modem 3 verbunden.

Der Energie-Einspeisesteller weist ein Gleichrichtermodul, einen Zwischenkreiskondensator und einen Wechselrichter TPS auf. Der Wechselrichter TPS liefert eine Spannung an die Primärspule 18.

Das erste analoge Filter 4 ist mittels einer Datenleitung SNI(PLAN) mit dem ersten Modem 3 verbunden. Das Modem 3 ist mit einem Bus mit dem Energie-Einspeisesteller 2 verbunden. Insbesondere übergibt das erste Modem 3 einer Wechselrichtersteuerung des Wechselrichters TPS einen Sollwert. Der Wechselrichter TPS liefert dann diesen Sollwert, wie zum Beispiel einen Spannungswert, an die Primärspule 18.

Zur Datenübertragung an die mobile Einheit 8 ist das erste Modem 3 an die erste Spuleneinrichtung 17 angeschlossen.

Die Primärspule 18 überträgt berührungslose die Ladeenergie an die Sekundärspule 10 in der mobilen Einheit 8. Die erste Spuleneinrichtung 17 überträgt das Datensignal berührungslos an die zweite Spuleinrichtung 9 der mobilen Einheit 8.

Die Sekundärspule 10 bildet mit einem Kondensator des Energie-Anpassstellers einen Schwingkreis, dessen Resonanzfrequenz im Wesentlichen der Frequenz der Wechselspannung und/oder des Wechselstroms entspricht welcher zur Übertragung der Ladeenergie eingesetzt ist.

Der Schwingkreis ist an einen Gleichrichter des Energie-Anpassstellers 12 angeschlossen. Der Gleichrichter des Energie-Anpassstellers 12 liefert eine Gleichspannung an den Schaltkreis 13.

Die zweite Spuleneinrichtung 9 ist mit dem zweiten Modem 11 zur Datenauswertung/- aufbereitung und Datenweiterleitung verbunden. Das zweite Modem 11 ist dazu an den Bus 15 der mobilen Einheit 8 angeschlossen. Über den Bus 15 sind so Daten zu und/oder von den sonstigen elektronischen Einrichtungen 16 der mobilen Einheit 8 oder den Schaltkreis 13 übermittelbar.

Der Schaltkreis 13 weist eine Spannungsüberwachung 21 auf. Der von der Spannungsüberwachung 21 erfasste Ist-Wert der Spannung des Gleichrichters des Energie-Anpassstellers 12 wird über den Bus 15 und das zweite Modem 11 sowie die zweite und erste Spuleneinrichtung 9, 17 an das erste Modem 3 weitergeleitet. Das Modem 3 vergleicht den Ist-Wert mit dem Sollwert oder liefert den Ist-Wert an die Steuerung des Wechselrichter TPS so dass dort der Ist-Wert mit dem Sollwert verglichen werden kann und entsprechend in die Steuerung des Wechselrichters TPS eingegriffen wird.

Der Schaltkreis 13 erzeugt aus der Spannung U einen Ladestrom I. Der Ladestrom I wird der Batterie 14 zum Laden zugeführt.

In Figur 4 sind die Sensoren zur Erfassung des Ladezustands der Batterie 14 nicht gezeigt. Diese sind vorzugsweis ebenfalls an den Bus 15 angeschlossen. So ist der Ladezustand zum Beispiel in einem Anzeigeelement in einem Armaturenbrett der mobilen Einheit 8 anzeigbar und gleichzeigt lassen sich die Daten zur Aufladung der Batterie 14 nutzen.

In einer weiteren nicht gezeigten bevorzugten Ausführungsform weist der Schaltkreis neben der Spannungsüberwachung 21 auch eine Stromüberwachung auf. Für eine Schnellladung der Batterie wird zuerst der Ladezustand der Batterie erfasst. Ist die Batterie tief genug entladen, so startet der erste Teil des Ladevorgangs stromgeführt. Es wird mittels der Stromerfassung auf einen Stromsollwert geregelt. Dies stellt somit einen Stromregler dar.

Ab einem Umschaltwert des Ladezustands der Batterie wird dann der Ladevorgang mit der Spannungsüberwachung spannungsgeführt geregelt wird. Somit bildet die Spannungsüberwachung mit dem Wechselrichter TPS einen Spannungsregler dar. Durch die berührungslose Datenübertragung kann der Wechselrichter TPS der Ladestation auf den wirklich an der Batterie anliegenden Strom oder Spannungswert geregelt werden.

In einer alternativen Ausführungsform liefert der Wechselrichter TPS einen konstanten Wert und der Schaltkreis 13 weist eine Leistungsregelung auf. Dadurch wird die ganze Regeleung in der mobilen Einheit ausgeführt und die Ladestationen sind einfacher standardisierbar.

Die mobile Einheit 8 ist vorzugsweise ein Fahrzeug besonders bevorzugt ein Elektrofahrzeug

Die Batterie 14 dient insbesondere zur Versorgung eines Antriebs des Elektrofahrzeugs.

### Bezugszeichenliste

- 1: Energie-Ladematte
- 2: Energie-Einspeisesteller
- 3: erstes Modem
- 4: erstes analoges Filter
- 5: zweites analoges Filter
- 6: Gesamtprimärspule
- 7: Zuleitung
- 8: mobile Einheit
- 9: zweite Spuleneinrichtung
- 10: Sekundärspule
- 11: zweites Modem
- 12: Energie-Anpasssteller
- 13: Schaltkreis
- 14: Batterie
- 15: Bus
- 16: sonstige elektronische Einrichtungen
- 17: erste Spuleneinrichtung
- 18: Primärspule
- 19: Gesamtsekundärspule
- 20: drittes analoges Filter
- 21: Spannungsüberwachung

## Patentansprüche

1. Verfahren zum Beladen einer Batterie in einer mobilen Einheit mit einem Elektrobeladungssystem,
das zum berührungslosen Beladen der Batterie der mobilen Einheit vorgesehen ist, wobei das Elektrobeladungssystem eine ortsfeste Ladestation aufweist,
wobei eine Primärspulenvorrichtung der Ladestation ortsfest angeordnet ist und eine Sekundärspulenvorrichtung des Elektrobeladungssystems in der mobilen Einheit angeordnet ist, wobei die Primärspulenvorrichtung und die Sekundärspulenvorrichtung derart ausgeführt sind, dass zwischen ihnen in einer zur Primärspulenvorrichtung relativen Ladeposition der mobilen Einheit eine Ladeenergie zum Beladen oder Entladen der Batterie übertragbar ist und Daten zur Kommunikation zwischen der mobilen Einheit und der Ladestation berührungslos empfangbar und/oder sendbar sind,
wobei die Primärspulenvorrichtung als Primärspule und eine erste Spuleneinrichtung ausgeführt ist und die Sekundärspulenvorrichtung als eine Sekundärspule und eine zweite Spuleneinrichtung ausgeführt ist, wobei während eines Beladevorgangs oder eines Entladevorgangs der Batterie zwischen der Primärspule und der Sekundärspule die Ladeenergie berührungslos übertragbar ist und zwischen der ersten und zweiten Spuleneinrichtung ein Datensignal, vorzugsweise bidirektional, übertragbar ist, wobei die Primärspule, die erste Spuleneinrichtung, die Sekundärspule und die zweite Spuleneinrichtung so angeordnet sind, dass ein jeweils erzeugtes Magnetfeld die Primärspule, die erste Spuleneinrichtung, die Sekundärspule und die zweite Spuleneinrichtung durchdringen,
wobei die Primärspule, die erste Spuleneinrichtung sowie die Sekundärspule und die zweite Spuleneinrichtung als Flachspule ausgeführt sind,
wobei jeweils die erste Spuleneinrichtung innerhalb der Primärspule und die zweite Spuleneinrichtung innerhalb der Sekundärspule angeordnet sind,
**dadurch gekennzeichnet, dass**
- die mobile Einheit durch Überfahren der Energieladematte das Elektrobeladungssystem aktiviert,
- Daten über die Batterie an die Ladestation übermittelt werden,
- die Batterie aufgeladen wird und gleichzeitig ein Wert für den Ladezustand der Batterie, vorzugsweise im Datensignal, an die Ladestation übermittelt wird,
wobei gleichzeitig mit dem Beladen Daten über den Wartungstechnischen Zustand der mobilen Einheit übermittel und ausgewertet werden, um entsprechende Wartungsarbeiten zu veranlassen oder vorzubereiten,
wobei die Datenübertragung mit einem Signal mit einer Datenträgerfrequenz im Bereich ab 0,1 MHz, vorzugsweise zwischen 0,9 MHz und 1,5 MHz betrieben wird und die Übertragung der Ladeenergie mit einer Energieträgerfrequenz im Bereich von 1 bis 500 kHz, vorzugsweise im Bereich zwischen 20 und 60 kHz betrieben wird,
wobei die Datenträgerfrequenz immer größer als die Energieträgerfrequenz ist,
wobei
- der Ladezustand der Batterie und zumindest ein Istwert für Ladestrom und/oder Ladespannung erfasst wird,
- und ein Wert für den Ladezustand und der Istwert zumindest teilweise berührungslos zur Ladestation übermittelt werden,
- der erste Teil des Ladevorgangs mit einem Stromregler stromgeführt geregelt wird und ab einem Überschreiten eines Umschaltwerts des Ladezustands der Batterie der Ladevorgang mit einem Spannungsregler spannungsgeführt geregelt wird,
wobei der Stromregler und der Spannungsregler stationär angeordnet sind, also unbeweglich relativ zur Ladestation.

2. Verfahren nach Anspruch 1,
**dadurch gekennzeichnet, dass**
die mobile Einheit sich mittels ihres Antriebs und ihrer Steuerung mit Hilfe der zweiten Spuleneinrichtung im Zusammenspiel mit den ersten Spuleneinrichtungen über der Energieladematte positioniert, so dass die Ladeenergie zwischen Primärspule und Sekundärspule übertragen wird.

## Claims

1. A method of charging a battery in a mobile unit by means of an electric charging system provided for contactless charging of the battery of the mobile unit,
wherein the electric charging system has a fixed charging station,
wherein a primary coil arrangement of the charging station is arranged in a fixed manner and a secondary coil arrangement of the electric charging system is arranged in the mobile unit, wherein the primary coil arrangement and the secondary coil arrangement are designed in such a manner that in a mobile-unit charging position relative to the primary coil arrangement, a charging energy for charging or discharging the battery is transferrable between the primary coil arrangement and the secondary coil arrangement and data for communication between the mobile unit and the charging station can be received and/or sent in a contactless manner, wherein the primary coil arrangement is designed as a primary coil and a first coil device and the secondary coil arrangement as a secondary coil and a second coil device, wherein during a charging procedure or a discharging procedure of the battery, the charging energy is transferrable in a contactless manner between the primary coil and the secondary coil and a data signal is transmittable, preferably bi-directionally, between the first and second coil device, wherein the primary coil, the first coil device, the secondary coil and the second coil device are arranged in such a manner that a magnetic field generated in each case penetrates the primary coil, the first coil device, the secondary coil and the second coil device,
wherein the primary coil, the first coil device as well as the secondary coil and the second coil device are in the form of a flat coil,
wherein in each case the first coil device is arranged within the primary coil and the second coil device within the secondary coil,
**characterised in that**
- the mobile unit activates the electric charging system by travelling over the energy charging mat,
- data relating to the battery is transmitted to the charging station,
- the battery is charged and simultaneously a value for the state of charge of the battery is transmitted to the charging station, preferably in the data signal,
wherein simultaneously with charging, data relating to the maintenance state of the mobile unit is transmitted and evaluated in order to bring about or prepare appropriate maintenance work, wherein the data transmission is operated with a signal with a data carrier frequency in the range from 0.1 MHz, preferably between 0.9 MHz and 1.5 MHz, and the transmission of the charging energy is operated with an energy carrier frequency in the range from 1 to 500 KHz, preferably in the range between 20 and 60 kHz,
wherein the data carrier frequency is always greater than the energy transfer frequency, wherein
- the state of charge of the battery and at least one actual value for charging current and/or charging voltage are determined,
- and a value for the state of charge and the actual value are transmitted to the charging station in an at least partially contactless manner,
- the first part of the charging procedure is regulated in a current-led manner by a current regulator and the charging procedure is regulated in a voltage-led manner by a voltage regulator when a switch-over threshold of the state of charge of the battery has been exceeded,
wherein the current regulator and the voltage regulator are arranged in a stationary manner, that is in a non-movable manner relative to the charging station.

2. A method according to claim 1,
**characterised in that** the mobile unit positions itself, by means of its drive and its control means, over the energy charging mat with the aid of the second coil device in conjunction with the first coil devices, so that the charging energy is transferred between primary coil and secondary coil.

## Revendications

1. Procédé de charge d'une batterie dans une unité mobile avec un système de charge électrique qui est prévu pour la charge sans contact de la batterie de l'unité mobile, dans lequel le système de charge électrique présente une station de charge fixe,
dans lequel un dispositif de bobine primaire de la station de charge est disposé de manière fixe et un dispositif de bobine secondaire du système de charge électrique est disposé dans l'unité mobile, dans lequel le dispositif de bobine primaire et le dispositif de bobine secondaire sont réalisés de telle sorte qu'une énergie de charge pour la charge ou la décharge de la batterie peut être transmise entre eux dans une position de charge de l'unité mobile par rapport au dispositif de bobine primaire et que des données pour la communication entre l'unité mobile et la station de charge peuvent être reçues et/ou envoyées sans contact,
dans lequel le dispositif de bobine primaire est réalisé sous la forme d'une bobine primaire et d'un premier moyen formant bobine et le dispositif de bobine secondaire est réalisé sous la forme d'une bobine secondaire et d'un second moyen formant bobine, dans lequel pendant un processus de charge ou un processus de décharge de la batterie, l'énergie de charge peut être transmise sans contact entre la bobine primaire et la bobine secondaire et un signal de données peut être transmis entre le premier et le second moyen formant bobine, de préférence de manière bidirectionnelle,
dans lequel la bobine primaire, le premier moyen formant bobine, la bobine secondaire et le second moyen formant bobine sont disposés de telle sorte qu'un champ magnétique respectivement généré traverse la bobine primaire, le premier moyen formant bobine, la bobine secondaire et le second moyen formant bobine,
dans lequel la bobine primaire, le premier moyen formant bobine ainsi que la bobine secondaire et le second moyen formant bobine sont réalisés sous la forme de bobines plates,
dans lequel le premier moyen formant bobine est disposé à l'intérieur de la bobine primaire et le second moyen formant bobine est disposé à l'intérieur de la bobine secondaire,
**caractérisé en ce que**
- l'unité mobile active le système de charge électrique en passant sur le tapis de charge d'énergie,
- des données sur la batterie sont transmises à la station de charge,
- la batterie est chargée et en même temps une valeur de l'état de charge de la batterie, de préférence dans le signal de données, est transmise à la station de charge,
dans lequel, simultanément à la charge, des données sur l'état de maintenance de l'unité mobile sont transmises et évaluées afin de déclencher ou préparer des travaux de maintenance correspondants,
dans lequel la transmission de données est effectuée avec un signal ayant une fréquence porteuse de données dans la gamme de 0,1 MHz, de préférence entre 0,9 MHz et 1,5 MHz, et la transmission de l'énergie de charge est effectuée avec une fréquence porteuse d'énergie dans la gamme de 1 à 500 kHz, de préférence dans la gamme comprise entre 20 et 60 kHz,
dans lequel la fréquence porteuse de données est toujours supérieure à la fréquence porteuse d'énergie,
dans lequel
- l'état de charge de la batterie et au moins une valeur réelle du courant de charge et/ou de la tension de charge sont détectés,
- et une valeur de l'état de charge et la valeur réelle sont transmises au moins partiellement sans contact à la station de charge,
- la première partie du processus de charge est régulée de manière commandée en courant au moyen d'un régulateur de courant et le processus de charge est régulé de manière commandée en tension au moyen d'un régulateur de tension dès qu'une valeur de commutation de l'état de charge de la batterie est dépassée,
dans lequel le régulateur de courant et le régulateur de tension sont disposés de manière stationnaire, c'est-à-dire immobile par rapport à la station de charge.

2. Procédé selon la revendication 1,
**caractérisé en ce que**
l'unité mobile se positionne au-dessus du tapis de charge d'énergie au moyen de son entraînement et de sa commande à l'aide du second moyen formant bobine en interaction avec les premiers moyens formant bobine, de sorte que l'énergie de charge est transmise entre la bobine primaire et la bobine secondaire.
